# EUROPÄISCHE PATENTSCHRIFT

(11) **EP 0 939 537 B1**
(45) Veröffentlichungstag und Bekanntmachung des Hinweises auf die Patenterteilung: **14.06.2006**
(21) Anmeldenummer: 99102546.1
(22) Anmeldetag: 10.02.1999
(51) Int. Cl.: H04M 3/42, H04Q 3/62

(54) **Verfahren und Anordnung zum Bereitstellen von Leistungsmerkmalen über ein Kommunikationsnetz**
Method and device for providing service features over a communication network
Méthode et appareil pour délivrer des services par un réseau de communication

(30) Priorität: 27.02.1998 DE 19808368
(43) Veröffentlichungstag der Anmeldung: 01.09.1999
(73) Patentinhaber: SIEMENS AKTIENGESELLSCHAFT, 80333 München (DE)
(72) Erfinder: Wehrend, Klaus, 82223 Eichenau (DE)

(56) Entgegenhaltungen:
- WO-A-97/18662
- WO-A-97/38518
- US-A- 5 638 432
- US-A- 5 673 311

## Beschreibung

Aufgrund einer zunehmenden zeitlichen und räumlichen Flexibilisierung der Arbeitsbedingungen nimmt die Anzahl derjenigen Mitarbeiter, die ihre beruflichen Aufgaben nicht an ihrem Arbeitsplatz im Unternehmen erledigen ständig zu. Aus "Das virtuelle Büro", telcomreport, Heft 4, 1997, Siemens AG Berlin und München, ist bekannt, daß für ein effektives Erledigen der Aufgaben außerhalb des Unternehmens ein Zugriff auf die im lokalen Kommunikationsnetz des Unternehmens angebotenen Kommunikations-Leistungsmerkmale unabhängig vom Aufenthaltsort des Mitarbeiters notwendig ist..Zu diesen Leistungsmerkmalen zählen die zusätzlich zu den standardmäßig in einem ISDN-Kommunikationsnetz bereitgestellten Leistungsmerkmale, wie beispielsweise Einrichten einer Konferenzschaltung, automatischer Rückruf, Signalisieren eines Nachrichteneingangs und Sprachbriefkastendienste.

Aus dem Stand der Technik sind bereits Mittel bekannt, externen Teilnehmern eine kommunikationsnetz-interne Verfügbarkeit von Leistungsmerkmalen zur Verfügung zu stellen. Beispielsweise offenbart die WO 97/18662 Mittel für Kommunikationseinrichtungen, welche mit Hilfe eines kommunikationsnetzseitig bzw. teilnehmerseitig anzuordnenden Virtual Presence Servers bzw. User Telephony Communications Device einen Anschluss von externen Endgeräten unter Nutzung des vollständigen Leistungsmerkmalsumfangs des Kommunikationsnetzes ermöglicht. Ein Erfordernis von zusätzlich zu installierenden Einheiten wird jedoch häufig als umständlich empfunden.

Der vorliegenden Erfindung liegt die Aufgabe zugrunde, verbesserte Maßnahmen anzugeben, durch welche von einem Kommunikationssystem realisierte Leistungsmerkmale an einem externen Endgerät bereitgestellt werden können.

Die Lösung dieser Aufgabe erfolgt erfindungsgemäß mit den Merkmalen des Patentanspruchs 1 bzw. 15.

Um an einem externen Endgerät die von einem Kommunikationssystem realisierten Leistungsmerkmale in gleicher Weise wie an einem internen Endgerät zur Verfügung stellen zu können, werden endgeräteorientierte Signalisierungsinformationen, wie sie üblicherweise im Rahmen eines Signalisierungsprotokolls Cornet-TS zwischen dem Kommunikationssystem und an diesem angeschlossenen internen Endgeräten übermittelt werden, zwischen dem Kommunikationssystem und dem externen Endgerät übermittelt. Das externe Endgerät ist dabei beispielsweise ein, über ein ISDN-orientiertes Kommunikationsnetz mit einem Kommunikationssystem verbundenes Endgerät.

Ein wesentlicher Vorteil der Erfindung besteht darin, daß die für das durch die Erfindung realisierbare sogenannte Teleworking-Konzept notwendigen Systemkomponenten in ein bestehendes Kommunikationssystem auf einfache Weise integrierbar sind.

Ein weiterer Vorteil der Erfindung besteht darin, daß durch die Anordnung der notwendigen Systemkomponenten auf einer separaten Teleworking-Teilnehmeranschlußbaugruppe (SLMPX), Änderungen im durch die Erfindung realisierbaren Teleworking-Konzept leicht vorgenommen werden können.

Vorteilhafte Weiterbildungen der Erfindung sind in den Unteransprüchen angegeben.

Ein Vorteil von Ausgestaltungen der Erfindung besteht darin, daß ein Teilnehmer, der sich an einem externen Endgerät am Kommunikationssystem angemeldet hat, unter der gleichen Rufnummer zu erreichen ist, wie an einem ihm zugeordneten internen Endgerät.

Durch eine Zuweisung von fiktiven Anschlußports - in der Literatur vielfach als Pseudo-Anschlußports bezeichnet - können Teilnehmer die Leistungsmerkmale des Kommunikationssystems an einem externen Endgerät auch dann nutzen, wenn ihnen kein physikalisch vorhandenes internes Endgerät zugeordnet ist.

Ein Ausführungsbeispiel der Erfindung wird im folgenden anhand der Zeichnung näher erläutert.

Dabei zeigen:
- Fig. 1:: ein Strukturbild zur schematischen Darstellung der am 'Teleworking'-Konzept beteiligten wesentlichen Funktionseinheiten;
- Fig. 2:: ein Strukturbild zur schematischen Darstellung der wesentlichen Funktionseinheiten einer Teleworking-Teilnehmeranschlußbaugruppe eines Kommunikationssystems.

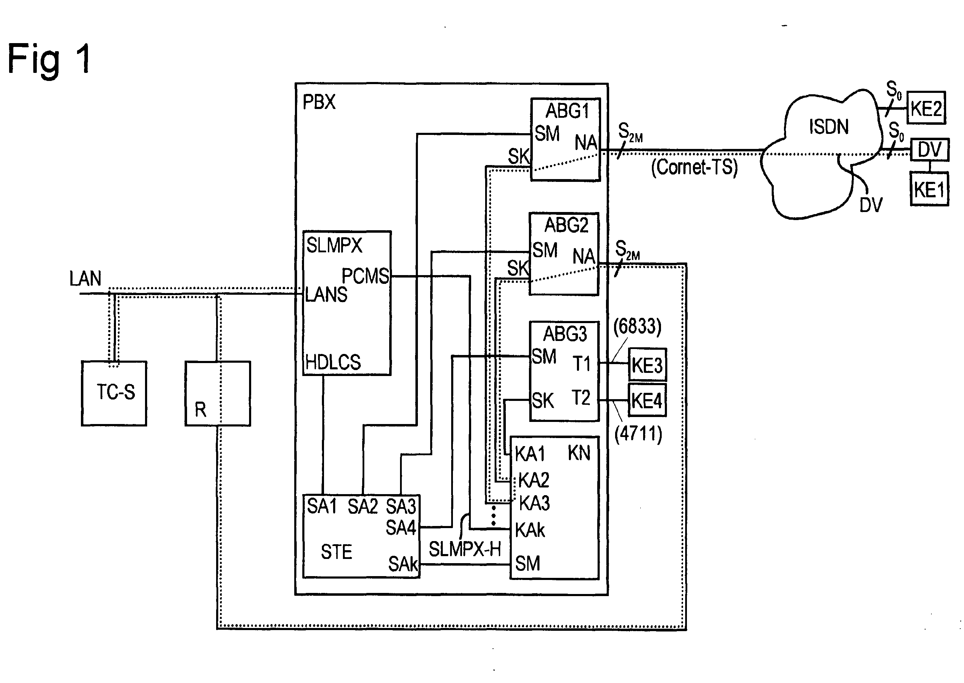

Fig. 1 zeigt eine schematische Darstellung eines Kommunikationssystems PBX mit einer in diesem angeordneten, als Teilnehmeranschlußeinheit ausgestalteten Teleworking-Teilnehmeranschlußbaugruppe - im weiteren mit Teleworking-Baugruppe SLMPX bezeichnet. Das Kommunikationssystem PBX weist weitere Teilnehmer- bzw. Netzanschlußeinheiten - beispielhaft sind eine erste, eine zweite und eine dritte Anschlußeinheit ABG1, ABG2 dargestellt - zum Anschluß von Kommunikationsendgeräten auf. Des weiteren beinhaltet das Kommunikationssystem PBX ein mehrere bidirektionale, Zeitmultiplex-orientierte Koppel-Anschlüsse KA1,...,KAk aufweisendes Koppelfeldmodul KN, wobei die Zeitmultiplex-orientierten Koppel-Anschlüsse KA1,...,KAk als PCM-Anschlüsse (Puls-Code-Modulation) - auch als PCM-Highways, Speech-Highways oder S_{2M}-Anschlüsse bezeichnet - ausgestaltet sind. Jeder PCM-Highway umfaßt zum einen 30 Nutzkanäle, welche als ISDN-orientierte B-Kanäle (Integrated Services Digital Network) mit einer Übertragungsrate von 64 kBit/s ausgestaltet sind und zum anderen einen Signalisierungskanal, welcher als ISDN-orientierter D-Kanal mit einer Übertragungsrate von 64 kBit/s ausgestaltet ist. Über den Koppel-Anschluß KAk ist das Koppelfeldmodul KN mit einer bidirektionalen, Zeitmultiplex-orientierten PCM-Schnittstelle PCMS der Teleworking-Baugruppe SLMPX verbunden. Über die weiteren PCM-Anschlüsse KA1, KA2, KA3 ist das Koppelfeldmodul KN jeweils mit einem bidirektionalen, Zeitmultiplex-orientierten Anschluß SK der ersten, der zweiten und der dritten Anschlußeinheit ABG1, ABG2, ABG3 verbunden.

Des weiteren ist im Kommunikationssystem PBX eine mehrere Steueranschlüsse SA1,...,SAk aufweisende Steuereinheit STE angeordnet. Über einen Steueranschluß SAk ist die Steuereinheit STE mit einem Steuereingang SM des Koppelfeldmoduls KN verbunden. Über die weiteren Steueranschlüsse SA1,...,SA4 ist die Steuereinheit STE zum einen mit einer auf der Teleworking-Baugruppe SLMPX angeordneten HDLC-Schnittstelle HDLCS und zum anderen mit Steueranschlüssen SM der ersten, der zweiten und der dritten Anschlußeinheit ABG1, ABG2 verbunden.

An einem Netzanschluß NA - beispielsweise ein bidirektionaler, Zeitmultiplex-orientierter S_{2M}-Anschluß - der ersten Anschlußeinheit ABG1 ist ein ISDN-orientiertes Kommunikationsnetz ISDN angeschlossen. An das ISDN-orientierte Kommunikationsnetz ISDN sind - beispielsweise über eine S₀-Schnittstelle - ein erstes externes Endgerät KE1 mit einer Datenverarbeitungseinrichtung DV, die z.B. als Personal Computer oder als Einschubkarte für ein bestehendes Endgerät ausgestaltet ist und ein zweites externes Endgerät KE2 angeschlossen. Über einem Netzanschluß NA der zweiten Anschlußeinheit ABG2 wird über eine Netzkopplungseinheit - im weiteren als Router R bezeichnet - eine Verbindung mit einem lokalen - mehrere Rechner (es ist nur ein Rechner TC-S dargestellt) miteinander verbindenden Ethernet-LAN (Lokal Area Network) - Rechnernetz LAN hergestellt. An einem ersten Teilnehmeranschluß T1 - beispielsweise an einem S₀-Anschluß (2B + D, d.h. 2 ISDN-orientierte Nutzdatenkanäle und ein ISDN-orientierter Signalisierungskanal) - der dritten Anschlußeinheit ABG3 ist ein erstes internes Endgerät KE3 mit einer kommunikationssysteminternen Rufnummer 6833 und an einem zweiten Teilnehmeranschluß T2 ein zweites internes Endgerät KE4 mit einer kommunikationssysteminternen Rufnummer 4711 angeschlossen.

Für eine Verbindung des ISDN-orientierten Kommunikationsnetzes ISDN mit dem lokalen Rechnernetz LAN ist der Router R sowohl mit einer S_{2M}-Schnittstelle als auch mit einer standardmäßigen LAN-Schnittstelle ausgestattet, wobei die S_{2M-}Schnittstelle mit dem Netzanschluß NA der zweiten Anschlußeinheit ABG2 des Kommunikationssystems PBX und die LAN-Schnittstelle des Routers R mit dem lokalen Rechnernetz LAN verbunden ist. Ein Router realisiert hinsichtlich seiner wesentlichen Funktion die Schicht 3 (Vermittlungsschicht) des OSI-Referenzmodells (Open Systems Interconnection), wobei mit Hilfe eines Routers Netze physikalisch mit jeweils unterschiedlicher Topologie der Schichten 1 (Bitübertragungsschicht) und 2 (Sicherungsschicht) verbunden werden - beispielsweise Ethernet-LAN und ISDN-orientiertes Kommunikationsnetz. Um Datenpakete zwischen den an einen Router angeschlossenen Netzen zu vermitteln, werden die in Routinginformationen der Datenpakete enthaltenen Adressangaben - Ziel- und Ursprungsadresse - von einer im Router befindlichen Steuereinrichtung interpretiert und bewertet. Anschließend werden die Datenpakete für eine Übermittlung protokollgerecht konvertiert.

Das lokale Rechnernetz LAN ist über eine LAN-Schnittstelle LANS mit der Teleworking-Baugruppe SLMPX verbunden. Im lokalen Rechnernetz LAN ist ein Rechner, z.B. ein Personal Computer - im weiteren mit Teleworking-Rechner TC-S bezeichnet -, angeordnet, der zur Steuerung der Teleworking-Baugruppe SLMPX dient.

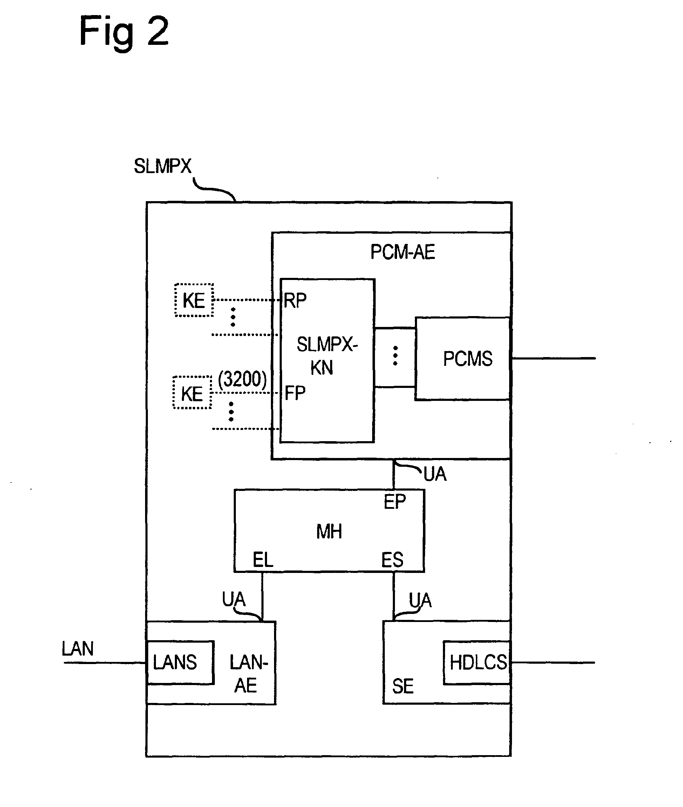

Fig. 2 zeigt eine schematische Darstellung der wesentlichen Funktionseinheiten der Teleworking-Baugruppe SLMPX. Die Teleworking-Baugruppe SLMPX weist eine LAN-Anschlußeinheit LAN-AE mit einer LAN-Schnittstelle LANS auf, wobei die LAN-Schnittstelle LANS mit dem lokalen Rechnernetz LAN verbindbar ist. Die Teleworking-Baugruppe SLMPX weist weiter eine PCM-Anschlußeinheit PCM-AE mit einer bidirektionalen, Zeitmultiplex-orientierten PCM-Schnittstelle PCMS sowie mit einem - mit der PCM-Schnittstelle PCMS verbundenen - Baugruppenkoppelfeldmodul SLMPX-KN auf. Die PCM-Schnittstelle PCMS ist über einen PCM-Highway SLMPX-H mit dem PCM-Anschluß KAk des Koppelfeldmoduls KN des Kommunikationssystems PBX verbindbar.

Des weiteren ist auf der Teleworking-Baugruppe SLMPX eine Signalisierungseinheit SE, mit einer HDLC-Schnittstelle HDLCS angeordnet. Über die HDLC-Schnittstelle HDLCS ist die Signalisierungseinheit SE mit dem Steueranschluß SA1 der Steuereinheit STE des Kommunikationssystems PBX verbindbar. Die LAN-Anschlußeinheit LAN-AE, die PCM-Anschlußeinheit PCM-AE und die Signalisierungseinheit SE sind jeweils über einen Anschluß UA mit einem Anschluß EL, EP, ES einer auf der Teleworking-Baugruppe SLMPX angeordneten Umwandlungseinheit MH verbunden.

In der Umwandlungseinheit MH wird anhand von Adressinformationen - d.h. Ziel- und Ursprungsdaten - die in, vom Teleworking-Rechner TC-S oder von der Steuereinheit STE des Kommunikationssystems PBX empfangenen Signalisierungsdaten enthalten sind, entschieden, ob die vom Teleworking-Rechner TC-S empfangenen Signalisierungsinformationen über die Signalisierungseinheit SE an die Steuereinheit STE, oder ob die von der Steuereinheit STE empfangenen Signalisierungsinformationen über die LAN-Anschlußeinheit LAN-AE an den Teleworking-Rechner TC-S weiterzuleiten sind. Ist dies der Fall, werden diese protokollgerecht konvertiert und an die Zieladresse weitergeleitet.

Eine Übermittlung von Datenpaketen zwischen der LAN-Anschlußeinheit LAN-AE und dem Teleworking-Rechner TC-S erfolgt beispielsweise auf Basis des TCP/IP-Protokolls (Transmission Control Protokoll / Internet Protokoll). Die Übermittlung von Datenpaketen zwischen der Steuereinheit STE des Kommunikationssystems PBX und der Signalisierungseinheit SE erfolgt auf Basis des HDLC-Protokolls (High Level Data Link Control).

Wird beispielsweise am ersten externen Endgerät KE1 durch einen Teilnehmer eine `Teleworking'-Anmeldung eingeleitet, so wird über einen der beiden B-Kanäle der S₀-Schnittstelle eine Datenverbindung DV (in Fig. 1 gestrichelt dargestellt) zwischen dem ersten externen Endgerät KE1 und dem Teleworking-Rechner TC-S über die erste Anschlußeinheit ABG1, das Koppelfeldmodul KN, die zweite Anschlußeinheit ABG2 und den Router R aufgebaut. Durch den Router R wird die Berechtigung eines Zugriffs über das ISDN-orientierte Kommunikationsnetz ISDN auf das lokale Rechnernetz LAN überprüft. Hierzu wird beispielsweise die in den für den Verbindungsaufbau der Datenverbindung DV zu übermittelnden Daten enthaltene Ursprungsals auch Zieladresse auf ihre Zulässigkeit - die auch als Source- und Destination-Prüfung bezeichnet wird - überprüft. Im Rahmen der Überprüfung der das erste externe Endgerät KE1 bezeichnenden Ursprungsadresse wird anhand einer Liste (nicht dargestellt) mit den berechtigten Rufnummern ermittelt, ob die Rufnummer des ersten externen Endgeräts KE1 zu den berechtigten Rufnummern zählt. Auf diese Weise können unzulässige Verbindungen über das ISDN-orientierte Kommunikationsnetz ISDN durch das erste externe Endgerät KE1 verhindert werden. Alternativ oder additiv kann die Zugriffsberechtigung auch durch Übermittlung eines Paßwortes überprüft werden.

Anstelle eines externen Routers R kann die Datenverbindung DV alternativ über eine im Kommunikationssystem PBX angeordnete Netzkopplungseinheit geführt werden, die eine direkte Verbindung zwischen dem Koppelfeldmodul KN des Kommunikationsnetzes PBX und dem lokalen Rechnernetz LAN realisiert.

Für die Anmeldung des ersten externen Endgeräts KE1 am Teleworking-Rechner TC-S wird von dem Teilnehmer beispielsweise die kommunikationssysteminterne Rufnummer eines dem Teilnehmer zugeordneten internen Endgeräts - beispielsweise die Rufnummer 4711 des zweiten internen Endgeräts KE4 - und eine zugehörige teilnehmerindividuelle Kennummer PIN (Private Identification Number) eingegeben. Beide Informationen werden über die Datenverbindung DV an den Teleworking-Rechner TC-S übermittelt. Ist dem Teilnehmer kein an das Kommunikationssystem PBX angeschlossenes internes Endgerät zugeordnet, kann alternativ die Rufnummer eines fiktiven Anschlußports - das ist ein rein logisch vorhandener, also nur verwaltungstechnisch eingerichteter, keine Hardwarekomponenten aufweisender Anschlußport - des Kommunikationssystems PBX übermittelt werden.

Anhand einer im Teleworking-Rechner TC-S gespeicherten - nicht dargestellten - Liste, welche die für das 'Teleworking' berechtigten kommunikationssysteminternen Rufnummern enthält, findet eine Überprüfung der Anmeldung des ersten externen Endgeräts KE1 statt. Hat die Überprüfung die Anmeldung bestätigt, wird dem ersten externen Endgerät KE1 vom Teleworking Rechner TC-S ein fiktiver Anschlußport - z.B. der fiktive Anschlußport FP mit der kommunikationssysteminternen Rufnummer 3200 - der Teleworking-Baugruppe SLMPX zugewiesen. Gleichzeitig werden durch die Aktivierung des vom Kommunikationssystem PBX realisierten Leistungsmerkmals 'Anrufumleitung' alle an den, durch die kommunikationssysteminterne Rufnummer bezeichneten internen Anschlußport gerichteten Rufe an den fiktiven Anschlußport FP der Teleworking-Baugruppe SLMPX umgeleitet.

Zusätzlich werden alle von der Steuereinheit STE des Kommunikationssystems PBX zum zweiten internen Endgerät KE4 (kommunikationssysteminterne Rufnummer 4711) zu übermittelnden endgeräteorientierten Signalisierungsinformationen - die Anmeldung des ersten externen Endgeräts KE1 am Kommunikationssystem PBX vorausgesetzt - an den fiktiven Anschlußport FP (mit der kommunikationssysteminternen Rufnummer 3200) der Teleworking-Baugruppe SLMPX umgeleitet. Die endgeräteorientierten Signalisierungsinformationen basieren auf einem Signalisierungsprotokoll Cornet-TS, wie es üblicherweise beim Signalisierungsaustausch zwischen internen Endgeräten und dem Kommunikationssystem PBX zur Verfügung steht. Die endgeräteorientierten Signalisierungsinformationen werden von der Steuereinheit STE des Kommunikationssystems PBX über die Teleworking-Baugruppe SLMPX an den Teleworking-Rechner TC-S übermittelt. Hierzu werden die über die HDLC-Schnittstelle HDLCS der Signalisierungseinheit SE empfangenen endgeräteorientierten Signalisierungsinformationen in der Umwandlungseinheit MH bewertet, protokollgemäß konvertiert und über die LAN-Schnittstelle LANS der LAN-Anschlußeinheit LAN-AE an den Teleworking-Rechner TC-S weiterübermittelt.

Der Teleworking-Rechner TC-S übermittelt die endgeräteorientierten Signalisierungsinformationen über die Datenverbindung DV an das erste externe Endgerät KE1. Durch die Übermittlung von, auf dem Signalisierungsprotokoll Cornet-TS basierenden endgeräteorientierten Signalisierungsinformationen an das erste externe Endgerät KE1, werden dem ersten externen Endgerät KE1 alle vom Kommunikationssystem PBX realisierten Leistungsmerkmale in gleicher Weise, wie dem zweiten internen Endgerät KE4 zur Verfügung gestellt. Eine Übermittlung von endgeräteorientierten Signalisierungsinformationen vom ersten externen Endgerät KE1 - seine Anmeldung am Kommunikationssystem PBX vorausgesetzt - zur Steuereinheit STE des Kommunikationssystems PBX erfolgt in gleicher Weise in umgekehrter Richtung.

Bei einem vom ersten externen Endgerät KE1 - seine Anmeldung am Kommunikationssystem PBX vorausgesetzt - veranlaßten Verbindungsaufbau - was z.B. durch Abnehmen des Hörers am ersten externen Endgeräts KE1 erfolgt - mit einem weiteren (internen oder externen) Endgerät - beispielsweise mit dem ersten internen Endgerät KE3 - wird eine Verbindungsaufbau-Meldung über die Datenverbindung DV an den Telekommunikations-Rechner TC-S übermittelt. Der Telekommunikations-Rechner TC-S leitet eine Verbindungsaufbau-Meldung für den fiktiven Anschlußport FP der Teleworking-Baugruppe SLMPX an die Steuereinheit STE des Kommunikationssystems weiter. Daraufhin wird in einem ersten Schritt von der Steuereinheit STE des Kommunikationssystems PBX eine Teilverbindung zwischen dem fiktiven Anschlußport FP der Teleworking-Baugruppe SLMPX und dem Koppelfeldmodul KN des Kommunikationssystems PBX durch Belegung eines freien Nutzkanals des PCM-Highways SLMPX-H aufgebaut.

In einem nächsten Schritt wird vom Teleworking-Rechner TC-S eine Bereitschafts-Meldung an das erste externe Endgerät KE1 über die Datenverbindung DV übermittelt. Das erste externe Endgerät KE1 sendet daraufhin in einer Antwortmeldung, die dem im ISDN-orientierten Kommunikationsnetz ISDN zugeordnete Rufnummer des freien ISDN-B-Kanals an den Teleworking-Rechner TC-S über die Datenverbindung DV. In einem weiteren Schritt wird ausgehend von einem weiteren fiktiven Anschlußport RP der Teleworking-Baugruppe SLMPX eine weitere Teilverbindung zum ersten externen Endgerät KE1 aufgebaut. Nach einem Koppeln der Teilverbindung mit der weiteren Teilverbindung im Baugruppenkoppelfeldmodul SLMPX-KN der Teleworking-Baugruppe SLMPX ertönt beim ersten externen Endgerät KE1 ein Wählton (signalisiert die Bereitschaft zur Wahlinformationseingabe).

Die daraufhin am ersten externen Endgerät KE1 eingegebenen Wahlinformationen - beispielsweise 6833 für das erste interne Endgerät KE3 - werden über die Datenverbindung DV an den Telekommunikations-Rechner TC-S übermittelt und von diesem über die Teleworking-Baugruppe SLMPX an die Steuereinheit STE des Kommunikationssystems PBX weitergeleitet. Von der Steuereinheit STE des Kommunikationssystems PBX wird daraufhin eine Endgeräteverbindung zwischen dem ersten internen Endgerät KE3 und dem ersten externen Endgerät KE1 eingerichtet.

Bei einem ausgehend von einem weiteren (externen oder internen) Endgerät mit dem zweiten internen Endgerät KE4 veranlaßten Verbindungsaufbau, wird - die Anmeldung des ersten externen Endgeräts KE1 mit der kommunikationssysteminternen Rufnummer des zweiten internen Endgerät KE4 vorausgesetzt - aufgrund der aktivierten Anrufumleitung für das zweite interne Endgerät KE4 vom Kommunikationssystem PBX eine Teilverbindung zwischen dem weiteren Endgerät und dem fiktiven Anschlußport FP der Teleworking-Baugruppe SLMPX aufgebaut. In einem nächsten Schritt wird vom Teleworking-Rechner TC-S eine Bereitschafts-Meldung an das erste externe Endgerät KE1 über die Datenverbindung DV übermittelt. Das erste externe Endgerät KE1 sendet daraufhin in einer Antwortmeldung, die dem im ISDN-orientierten Kommunikationsnetz ISDN zugeordnete Rufnummer des freien ISDN-B-Kanals an den Teleworking-Rechner TC-S über die Datenverbindung DV. In einem weiteren Schritt wird ausgehend von dem weiteren fiktiven Anschlußport RP der Teleworking-Baugruppe SLMPX eine weitere Teilverbindung zum ersten externen Endgerät KE1 aufgebaut. In einem abschließenden Schritt werden die Teilverbindung und die weitere Teilverbindung im Baugruppenkoppelfeldmodul SLMPX-KN der Teleworking-Baugruppe SLMPX gekoppelt wodurch die Endgeräteverbindung zwischen dem ersten externen Endgerät KE1 und dem weiteren Endgerät zustande kommt.

Die während einer zwischen dem ersten externen Endgerät KE1 und einem weiteren Endgerät bestehenden Endgeräteverbindung zwischen dem Kommunikationssystem PBX und dem ersten externen Endgerät KE1 zu übermittelnden endgeräteorientierten Signalisierungsinformationen werden in gleicher Weise, wie oben beschrieben über die Datenverbindung DV übermittelt.

Nach Beendigung der zwischen dem ersten externen Endgerät KE1 und dem weiteren Endgerät bestehenden Endgeräteverbindung wird der weitere fiktive Anschlußport RP der Teleworking-Baugruppe SLMPX vom Teleworking-Rechner TC-S freigegeben und steht für einen neuen Verbindungsaufbau zur Verfügung. Der fiktive Anschlußport FP der Teleworking-Baugruppe SLMPX wird erst nach einem durch den Teilnehmer veranlaßten Abmelden des ersten externen Endgeräts KE1 freigegeben. Nach dem Abmelden werden aufgrund der Deaktivierung der Anrufumleitung am Kommunikationssystem PBX, die von der Steuereinheit STE des Kommunikationssystems PBX an den Teilnehmer zu übermittelnden endgeräteorientierten Signalisierungsinformationen an den Anschlußport des dem Teilnehmer zugeordneten internen Endgeräts - beispielsweise an den Anschlußport des zweiten internen Endgeräts KE4 mit der kommunikationssysteminternen Rufnummer 4711 - übermittelt.

Auf der Teleworking-Baugruppe SLMPX sind maximal 255 fiktive Anschlußports konfigurierbar. Des weiteren ist die Teleworking-Baugruppe SLMPX in Form von PCM-Highways über 128 Nutzdatenkanäle mit dem Koppelfeldmodul KN des Kommunikationssystems PBX verbunden. Da für jede Endgeräteverbindung eines angemeldeten Endgerätes mit einem weiteren Endgerät zwei Nutzkanäle benötigt werden, können maximal 64 Endgeräteverbindungen gleichzeitig über die Teleworking-Baugruppe SLMPX aufgebaut werden. Da bei maximal 64 gleichzeitig aufgebauten Endgeräteverbindungen 64 fiktive Anschlußports RP der Teleworking-Baugruppe SLMPX durch die Endgeräteverbindungen belegt sind, stehen 191 freie fiktive Anschlußports FP der Teleworking-Baugruppe SLMPX für ein Anmelden von Endgeräten am Kommunikationssystem PBX zur Verfügung.

Wie schon erwähnt, kann das erfindungsgemäße 'Teleworking'-Konzept sowohl von Teilnehmern genutzt werden, die einen Büroarbeitsplatz (ein internes, am Kommunikationssystem PBX angeordnetes Endgerät) besitzen, als auch von Teilnehmern, denen nur ein fiktiver Anschlußport mit einer kommunikationssysteminternen Rufnummer (aber kein physikalisch vorhandenes Endgerät) zugeordnet ist. Letztgenannte Art von Teilnehmern werden auch als 'remote call center Agenten' bezeichnet. Ist ein derartiger Teilnehmer nicht am Teleworking-Rechner TC-S angemeldet, werden alle an ihn gerichteten Rufe zu dem, dem Teilnehmer zugeordneten Sprachbriefkasten ('Voice Mail') umgeleitet.

Ein weiteres Anwendungsgebiet ergibt sich für kleine Unternehmensfilialen, die auch als Satellitenbüros bezeichnet werden. Hierbei handelt es sich um mehrere externe Teilnehmer, die nicht durch ein eigenes Kommunikationssystem mit dem lokalen Kommunikationsnetz des Unternehmens verbunden sind. Durch ein auf der Erfindung basierendes 'Teleworking'-Konzept stehen den externen Teilnehmern alle im lokalen Kommunikationsnetz angebotenen Leistungsmerkmale zur Verfügung. Durch ein Anmelden an einem internen Endgerät des lokalen Kommunikationsnetzes, das in analoger Weise zum oben beschriebenen Anmelden am ersten externen Endgerät KE1 erfolgt, werden alle an ein dem Teilnehmer im lokalen Kommunikationsnetz zugeordnete Endgerät gerichteten Rufe an das interne Endgerät umgeleitet, an dem sich der Teilnehmer aktuell angemeldet hat. Somit ist der Teilnehmer an beliebigen Endgeräten im lokalen Kommunikationsnetz unter der gleichen Rufnummer erreichbar. Zusätzlich zum Leistungsmerkmal 'Anrufumleitung' werden alle Signalisierungsinformationen, wie z.B. 'Sprachnachricht für Teilnehmer gespeichert' an das interne Endgerät umgeleitet, an dem sich der Teilnehmer aktuell angemeldet hat.

## Patentansprüche

1. Verfahren zum Bereitstellen von durch ein Kommunikationssystem (PBX) realisierten und an internen Teilnehmeranschlüssen verfügbaren Leistungsmerkmalen über ein Kommunikationsnetz (ISDN) an einem externen Endgerät (KE1),
**dadurch gekennzeichnet,**
**daß** durch Anmelden des externen Endgeräts (KE1) beim Kommunikationssystem (PBX) auf einem Nutzdatenkanal (ISDN-B-Kanal) eine Datenverbindung (DV) zwischen dem externen Endgerät (KE1) und einer, eine Kopplungseinrichtung (SLMPX-KN) aufweisende Teleworking-Teilnehmeranschlußbaugruppe (SLMPX) des Kommunikationssystems (PBX) eingerichtet wird,
**daß** zwischen dem externen Endgerät (KE1) und dem Kommunikationssystem (PBX) über die Datenverbindung (DV) endgeräteorientierte Signalisierungsinformationen, wie sie üblicherweise im Rahmen eines Signalisierungsprotokolls (Cornet-TS) zwischen internen Endgeräten (KE4) und dem Kommunikationssystem (PBX) zur Verfügung stehen, übermittelt werden.

2. Verfahren nach Anspruch 1,
**dadurch gekennzeichnet,**
**daß** die Datenverbindung (DV) zwischen dem externen Endgerät (KE1) und der Teleworking-Teilnehmeranschlußbaugruppe (SLMPX) unter Umwandlung des Datenformats des Nutzdatenkanals auf das eines lokalen Rechnernetzes (LAN), welches mit der Teleworking-Teilnehmeranschlußbaugruppe (SLMPX) verbunden ist, aufgebaut wird.

3. Verfahren nach Anspruch 2,
**dadurch gekennzeichnet,**
**daß** an das lokale Rechnernetz (LAN) ein Teleworking-Rechner (TC-S) zur Steuerung der Teleworking-Teilnehmeranschlußbaugruppe (SLMPX) angeschlossen ist, über den die endgeräteorientierten Signalisierungsinformationen von und zur Teleworking-Teilnehmeranschlußbaugruppe (SLMPX) geführt werden.

4. Verfahren nach Anspruch 3,
**dadurch gekennzeichnet,**
**daß** durch den Teleworking-Rechner (TC-S) anhand von teilnehmerbezogenen Daten, die vom externen Endgerät (KE1) über die Datenverbindung (DV) übermittelt werden, eine Berechtigung zum Anmelden überprüft wird.

5. Verfahren nach Anspruch 4,
**dadurch gekennzeichnet,**
**daß** im Zuge einer Anmeldung ein erster fiktiver Teilnehmer-Anschlußport (FP) der Teleworking-Teilnehmeranschlußbaugruppe (SLMPX) dem externen Endgerät (KE1) vom Teleworking-Rechner (TC-S) zugewiesen wird, wobei Signalisierungsinformationen, die von einer Steuereinheit (STE) des Kommunikationssystems (PBX) an einen, durch die teilnehmerbezogenen Daten identifizierten internen Teilnehmeranschluß gerichtet sind, an den fiktiven Teilnehmer-Anschlußport (FP) umgeleitet werden.

6. Verfahren nach Anspruch 3 bis 5,
**dadurch gekennzeichnet,**
**daß** in der Teleworking-Teilnehmeranschlußbaugruppe (SLMPX) anhand von Zieladressinformationen, die in vom Teleworking-Rechner (TC-S) oder von der Steuerungseinheit (STE) an die Teleworking-Teilnehmeranschlußbaugruppe (SLMPX) gesendeten Signalisierungsinformationen enthalten sind, entschieden wird,
ob die vom Teleworking-Rechner (TC-S) empfangenen Signalisierungsinformationen an die Steuerungseinheit (STE) oder die von der Steuerungseinheit (STE) empfangenen Signalisierungsinformationen an den Teleworking-Rechner (TC-S) weiterzuleiten sind.

7. Verfahren nach Anspruch 5 oder 6,
**dadurch gekennzeichnet,**
**daß** im Zuge eines der Anmeldung nachfolgend veranlaßten Verbindungsaufbaus zwischen dem externen Endgerät (KE1) und einem weiteren Endgerät (KE2, KE3), eine erste Teilverbindung zwischen dem weiteren Endgerät (KE2, KE3) und dem ersten fiktiven Teilnehmer-Anschlußport (FP) der Teleworking-Teilnehmeranschlußbaugruppe (SLMPX) aufgebaut wird.

8. Verfahren nach Anspruch 7,
**dadurch gekennzeichnet,**
**daß** im Zuge des der Anmeldung nachfolgend veranlaßten Verbindungsaufbaus eine zweite Teilverbindung zwischen einem zweiten fiktiven Teilnehmer-Anschlußport (RP) der Teleworking-Teilnehmeranschlußbaugruppe (SLMPX) und dem externen Endgerät (KE1) aufgebaut wird.

9. Verfahren nach Anspruch 8,
**dadurch gekennzeichnet,**
**daß** die erste und die zweite Teilverbindung in der Teleworking-Teilnehmeranschlußbaugruppe (SLMPX) unter Bildung einer Endgeräteverbindung miteinander gekoppelt werden.

10. Verfahren nach Anspruch 9,
**dadurch gekennzeichnet,**
**daß** die bei Bestehen der Endgeräteverbindung zwischen dem externen Endgerät (KE1) und dem Kommunikationssystem (PBX) zu übermittelnden Signalisierungsinformationen über die Datenverbindung (DV) in Form von endgeräteorientierten Signalisierungsinformationen übermittelt werden.

11. Verfahren nach Anspruch 7 bis 10,
**dadurch gekennzeichnet,**
**daß** über die Teleworking-Teilnehmeranschlußbaugruppe (SLMPX) gleichzeitig mehrere Endgeräteverbindungen für jeweils zwischen einem an dem Kommunikationssystem (PBX) angemeldeten externen Endgerät und einem weiteren Endgerät geführt werden.

12. Verfahren nach einem der vorhergehenden Ansprüche,
**dadurch gekennzeichnet,**
**daß** der interne Teilnehmeranschluß lediglich im Sinne eines fiktiven Anschlußports eingerichtet ist.

13. Verfahren nach einem der vorhergehenden Ansprüche,
**dadurch gekennzeichnet,**
**daß** das externe Endgerät (KE1) über ein ISDN-orientiertes Kommunikationsnetz, oder über ein analoges Kommunikationsnetz, oder über ein Funk-Kommunikationsnetz mit dem Kommunikationssystem (PBX) verbunden ist.

14. Verfahren nach einem der vorhergehenden Ansprüche,
**dadurch gekennzeichnet,**
**daß** ein internes Endgerät (KE3, KE4) beim Kommunikationssystem (PBX) anmeldet wird.

15. Teleworking-Teilnehmeranschlußbaugruppe (SLMPX) in einem Kommunikationssystem (PBX),
- mit einer, eine LAN-Schnittstelle (LANS) aufweisenden LAN-Anschlußeinheit (LAN-AE), bei der die LAN-Schnittstelle (LANS) zum Anschluß an ein lokales Rechnernetz (LAN) vorgesehen ist,
- mit einer, eine HDLC-Schnittstelle (HDLCS) aufweisenden Signalisierungseinheit (SE), bei der die HDLC-Schnittstelle (HDLCS) zum Anschluß an eine Steuereinheit (STE) des Kommunikationssystems (PBX) vorgesehen ist,
- mit einer, eine PCM-Schnittstelle (PCMS) aufweisenden PCM-Anschlußeinheit (PCM-AE), bei der die PCM-Schnittstelle (PCMS) zum Anschluß an einen bidirektionalen, Zeitmultiplex-orientierten Anschluß (KAk) eines Koppelfeldmoduls (KN) des Kommunikationssystems (PBX) vorgesehen ist, und die PCM-Anschlußeinheit (PCM-AE) ein Baugruppenkoppelfeldmodul (SLMPX-KN) zum Koppeln von, über die PCM-Schnittstelle (PCMS) geführten Nutzdatenverbindungen aufweist,
- mit einer Umwandlungseinheit (MH) zum protokollgerechten Konvertieren und Weiterleiten von zwischen der Signalisierungseinheit (SE) und der PCM-Anschlußeinheit (PCM-AE) zu übermittelnden Daten.

## Claims

1. Method for providing service features implemented by a communication system (PBX) and available to internal subscriber connections via a communication network (ISDN) at an external terminal (KE1),
**characterised in that**,
as a result of the external terminal (KE1) logging on to the communication system (PBX) on a service data channel (ISDN-B channel), a data link (DV) is set up between the external terminal (KE1) and a teleworking subscriber line module (SLMPX), comprising a coupling device (SLMPX-KN), of the communication system (PBX),
that between the external terminal (KE1) and the communication system (PBX), terminal-oriented signalling information, as is usually available in the context of a signalling protocol (Cornet-TS), is transmitted between the internal terminals (KE4) and the communication system (PBX).

2. Method according to Claim 1,
**characterised in that**
the data link (DV) between the external terminal (KE1) and the teleworking subscriber line module (SLMPX) is established such that the data format of the service data channel is converted to that of a local area network (LAN), which is connected to the teleworking subscriber line module (SLMPX).

3. Method according to Claim 2,
**characterised in that**
a teleworking computer (TC-S) for controlling the teleworking subscriber connection unit (SLMPX) is connected to the local area network (LAN), the terminal-oriented signalling information being directed via said computer from and to the teleworking subscriber line module (SLMPX).

4. Method according to Claim 3,
**characterised in that**
the teleworking computer (TC-S) checks a log-on authorisation by means of subscriber-related data, which is transmitted by the external terminal (KE1) via the data link (DV).

5. Method according to Claim 1,
**characterised in that**,
in the course of a log-on, a first fictitious subscriber connection port (FP) of the teleworking subscriber line module (SLMPX) is allocated to the external terminal (KE1) by the teleworking computer (TC-S), wherein signalling information which is directed by a control unit (STE) of the communication system (PBX) to an internal subscriber connection identified by user-related data is diverted to the fictitious subscriber connection port (FP).

6. Method according to Claim 3 to 5,
**characterised in that**,
in the teleworking subscriber line module (SLMPX), a decision is taken, on the basis of target address information which is contained in the signalling information which is sent by the teleworking computer (TC-S) or by the control unit (STE) to the teleworking subscriber line module (SLMPX), as to whether the signalling information received by the teleworking computer (TC-S) should be redirected to the control unit (STE) or whether the signalling information received by the control unit (STE) should be redirected to the teleworking computer (TC-S).

7. Method according to Claim 5 or 6,
**characterised in that**,
in the course of setting up a link that has been initiated, subsequent to log-on, between the external terminal (KE1) and a further terminal (KE2, KE3), a first partial connection is set up between the further terminal (KE2, KE3) and the first fictitious subscriber connection port (FP) of the teleworking subscriber line module (SLMPX).

8. Method according to Claim 7,
**characterised in that**,
in the course of setting up a link initiated subsequent to log-on, a second partial connection is set up between a second fictitious subscriber connection port (RP) of the teleworking subscriber line module (SLMPX) and the external terminal (KE1).

9. Method according to Claim 8,
**characterised in that**
the first and the second partial connection in the teleworking subscriber line module (SLMPX) are connected to each other by the formation of a terminal link.

10. Method according to Claim 9,
**characterised in that**,
where a terminal link exists between the external terminal (KE1) and the communication system (PBX), the signalling information that is to be transmitted via the data link (DV) is transmitted in the form of terminal-oriented signalling information.

11. Method according to Claim 7 to 10,
**characterised in that**
a plurality of terminal links is directed via the teleworking subscriber line module (SLMPX) at the same time, each being between an external terminal logged on to the communication system (PBX) and a further terminal.

12. Method according to any of the previous claims,
**characterised in that**
the internal subscriber connection is only configured as a fictitious connection port.

13. Method according to any of the previous claims,
**characterised in that**
the external terminal (KE1) is connected to the communication system (PBX) via an ISDN-oriented communication network or via a similar communication network or via a radio communication network.

14. Method according to any of the previous claims,
**characterised in that**
an internal terminal (KE3, KE4) is logged on to the communication system (PBX).

15. Teleworking subscriber line module (SLMPX) in a communication system (PBX),
- having an LAN connection unit (LAN-AE) comprising an LAN interface (LAN-AE), in which the LAN interface (LANS) is provided for connection to a local computer network LAN),
- having a signalling unit (SE) comprising an HDLC interface (HDLCS), in which the HDLC interface (HDLCS) is provided for connection to a control unit (STE) of the communication system (PBX),
- having a PCM connection unit (PCM-AE) comprising a PCM interface (PCMS), in which unit the PCM interface (PCMS) is provided for connection to a bidirectional, time multiplex-oriented connection (KAk) of a switching network module (KN) of the communication system (PBX),
and the PCM connection unit (PCM-AE) has a packet-switching network module (SLMPX-KN) for coupling service data links directed via the PCM interface (PCMS),
- having a conversion unit (MH) for protocol-appropriate converting and redirecting of data to be transmitted between the signalling unit (SE) and the PCM connection unit (PCM-AE).

## Revendications

1. Procédé pour mettre à disposition des compléments de service réalisés par un système de communication (PBX) et disponibles sur des branchements d'abonnés internes via un réseau de communication (ISDN) sur un terminal (KE1) externe,
**caractérisé en ce que**,
par la demande du terminal (KE1) externe auprès du système de communication (PBX), on met en place sur un canal de données utile (ISDN-B) une liaison de données (DV) entre le terminal (KE1) externe et un ensemble de raccordement d'abonné de télétravail (SLMPX), présentant un système de couplage (SLMPX-KN), du système de communication (PBX),
**en ce que** des informations de signalisation orientées terminaux, comme celles qui sont mises à disposition habituellement dans le cadre d'un protocole de signalisation (Cornet-TS) entre des terminaux (KE4) internes et le système de communication (PBX), sont transmises entre le terminal (KE1) externe et le système de communication (PBX) au moyen de la liaison de données (DV).

2. Procédé selon la revendication 1,
**caractérisé en ce que**
la liaison de données (DV) est établie entre le terminal (KE1) externe et l'ensemble de raccordement d'abonné de télétravail (SLMPX) avec conversion du format de données du canal de données utile sur celui d'un réseau d'ordinateurs (LAN) local, qui est relié à l'ensemble de raccordement d'abonné de télétravail (SLMPX).

3. Procédé selon la revendication 2,
**caractérisé en ce que**
au réseau d'ordinateurs (LAN) local est raccordé un ordinateur de télétravail (TC-S) pour la commande de l'ensemble de raccordement d'abonné de télétravail (SLMPX), par lequel les informations de signalisation orientées terminaux sont guidées à partir de l'ensemble de raccordement d'abonné de télétravail (SLMPX) et vers celui-ci.

4. Procédé selon la revendication 3,
**caractérisé en ce que**
une autorisation de demande de communication est contrôlée par l'ordinateur de télétravail (TC-S) à l'aide de données spécifiques à l'abonné, qui sont transmises par le terminal (KE1) externe via la liaison de données (DV).

5. Procédé selon la revendication 4,
**caractérisé en ce que**
dans le cas d'une demande de communication, un premier port de raccordement d'abonné (FP) fictif de l'ensemble de raccordement d'abonné de télétravail (SLMPX) est attribué au terminal (KE1) externe par l'ordinateur de télétravail (TC-S), des informations de signalisation, qui sont adressées par une unité de commande (STE) du système de communication (PBX) à un raccordement d'abonné interne et identifié par les données spécifiques à l'abonné, sont renvoyées au port de raccordement d'abonné (FP) fictif.

6. Procédé selon la revendication 3 à 5,
**caractérisé en ce que**
dans l'ensemble de raccordement d'abonné de télétravail (SLMPX), à l'aide d'informations d'adresse cible, qui sont contenues dans des informations de signalisation envoyées par l'ordinateur de télétravail (TC-S) ou par l'unité de commande (STE) à l'ensemble de raccordement d'abonné de télétravail (SLMPX),
on décide si des informations de signalisation reçues de l'ordinateur de télétravail (TC-S) doivent être transmises à l'unité de commande (STE) ou si les informations de signalisation reçues de l'unité de commande (STE) doivent être transmises à l'ordinateur de télétravail (TC-S).

7. Procédé selon la revendication 5 ou 6,
**caractérisé en ce que**
dans le cadre d'un établissement de liaison effectué à la suite de la demande entre le terminal (KE1) externe et un autre terminal (KE2, KE3), une première liaison partielle est établie entre l'autre terminal (KE2, KE3) et le premier port de raccordement d'abonné (FP) fictif de l'ensemble de raccordement d'abonné de télétravail (SLMPX).

8. Procédé selon la revendication 7,
**caractérisé en ce que**
dans le cadre de l'établissement de liaison effectué à la suite de la demande, une seconde liaison partielle est établie entre un second port de raccordement d'abonné (RP) fictif de l'ensemble de raccordement d'abonné de télétravail (SLMPX) et le terminal (KE1) externe.

9. Procédé selon la revendication 8,
**caractérisé en ce que**
la première et la seconde liaisons partielles sont couplées entre elles dans l'ensemble de raccordement d'abonné de télétravail (SLMPX) avec la formation d'une liaison de terminaux.

10. Procédé selon la revendication 9,
**caractérisé en ce que**
les informations de signalisation à transmettre en cas d'existence de la liaison de terminaux entre le terminal (KE1) externe et le système de communication (PBX) sont transmises via la liaison de données (DV) sous la forme d'informations de signalisation orientées terminaux.

11. Procédé selon la revendication 7 à 10,
**caractérisé en ce que**
plusieurs liaisons de terminaux sont guidées simultanément au moyen de l'ensemble de raccordement d'abonné de télétravail (SLMPX) respectivement entre un terminal externe demandé sur le système de communication (PBX) et un autre terminal.

12. Procédé selon l'une quelconque des revendications précédentes,
**caractérisé en ce que**
le raccordement d'abonné interne est mis en place seulement dans le sens d'un port de raccordement fictif.

13. Procédé selon l'une quelconque des revendications précédentes,
**caractérisé en ce que**
le terminal (KE1) externe est relié au système de communication (PBX) au moyen d'un réseau de communication orienté ISDN ou d'un réseau de communication analogique ou d'un réseau de communication radio.

14. Procédé selon l'une quelconque des revendications précédentes,
**caractérisé en ce que**
un terminal (KE3, KE4) interne est signalé auprès du système de communication (PBX).

15. Ensemble de raccordement d'abonné de télétravail (SLMPX) dans un système de communication (PBX),
- avec une unité de raccordement de LAN (LAN-AE) présentant une interface LAN (LANS), sur laquelle l'interface LAN (LANS) est prévue pour le raccordement à un réseau d'ordinateurs local (LAN),
- avec une unité de signalisation (SE) présentant une interface HDLC (HDLCS), sur laquelle l'interface HDLC (HDLCS) est prévue pour le raccordement à une unité de commande (STE) du système de communication (PBX),
- avec une unité de raccordement PCM (PCM-AE) présentant une interface de PCM (PCMS), sur laquelle l'interface de PCM (PCMS) est prévue pour le raccordement à un branchement (KAK), bidirectionnel et orienté multiplexage temporel, d'un module de champ de couplage (KN) du système de communication (PBX), et l'unité de raccordement de PCM (PCM-AE) présentant un module de champ de couplage (SLMPX-KN) pour le couplage de liaisons de données utiles guidées par l'interface de PCM (PCMS),
- avec une unité de conversion (MH) pour la conversion conforme au protocole et la transmission de données à transmettre entre l'unité de signalisation (SE) et l'unité de raccordement de PCM (PCM-AE).
